# NEUE EUROPÄISCHE PATENTSCHRIFT

(11) **EP 2 777 113 B2**
(45) Veröffentlichungstag und Bekanntmachung des Hinweises auf die Entscheidung über den Einspruch: **27.05.2020**
(45) Hinweis auf die Patenterteilung: 06.09.2017
(21) Anmeldenummer: 12813782.5
(22) Anmeldetag: 12.12.2012
(51) Int. Cl.: H02G 3/14

(54) **INSTALLATIONSANORDNUNG**
INSTALLATION ARRANGEMENT
ENSEMBLE D'INSTALLATION

(30) Priorität: 28.12.2011 DE 102011122494
(43) Veröffentlichungstag der Anmeldung: 17.09.2014
(73) Patentinhaber: Schneider Electric Industries S.A.S., 92500 Rueil-Malmaison (FR)
(72) Erfinder: VICKTORIUS, Richard, 50733 Köln (DE); KLINGBERG, Axel, 51647 Gummersbach (DE); CUCCINIELLO, Giuseppe, E-08022 Barcelona (ES)
(74) Vertreter: Manitz Finsterwald Patent- und Rechtsanwaltspartnerschaft mbB
(86) Internationale Anmeldenummer: PCT/EP2012/075238
(87) Internationale Veröffentlichungsnummer: WO 2013/098078

(56) Entgegenhaltungen:
- AT-U- 009 548
- CA-A1- 2 206 814
- DE-A1- 2 432 811
- DE-A1-102009 021 449
- DE-U- 1 993 994
- DE-U- 7 144 829
- DE-U1- 7 931 905
- US-A- 4 662 697
- US-A- 6 130 384
- US-A1- 2008 272 258
- Anonymous: "Katalog 1992", Busch-Jaeger GmbH Elektro Busch-Jaeger GmbH Elektro, [retrieved on 2018-07-25]
- Anonymous: "Katalog 2007", Busch-Jaeger GmbH Elektro Busch-Jaeger GmbH Elektro, [retrieved on 2018-07-25]

## Beschreibung

Die Erfindung betrifft eine Installationsanordnung nach dem Oberbegriff des Patentanspruchs 1. Eine solche Installationsanordnung ist aus der US 4 662 697 A bekannt.

Im Rahmen der Gebäudeinstallationstechnik werden elektrische Installationsgeräte dazu verwendet, elektrische Verbraucher mittels Steckdosen mit Energie zu versorgen und/oder mittels Schaltelementen die Energieversorgung von elektrischen Verbrauchern zu steuern. Die Installationsgeräte eines derartigen Versorgungsnetzes können ortsfest in einer Wand angeordnet sein und sind häufig von einem Rahmen umgeben. Abhängig von den örtlichen Gegebenheiten werden Installationsgeräte benachbart zueinander angeordnet, um platzsparende und optisch ansprechende Bedienstellen zu schaffen. Die Installationsgeräte werden horizontal oder vertikal nebeneinander angeordnet und von Rahmen mit einer entsprechenden Anzahl von Aufnahmeöffnungen umgeben. Die Abmessungen der Installationsgeräte und der Aufnahmeöffnungen in den Rahmen sind aufeinander abgestimmt, so dass bei unterschiedlichen und variablen Kombinationen von Installationsgeräten ein gleichbleibendes Design erhalten bleibt. Die bisher bekannten Lösungen weisen keine Möglichkeiten auf, um Funktionselemente außerhalb des elektrischen Versorgungsnetzes in ein derartiges Rahmenkonzept zu integrieren.

Die Aufgabe der vorliegenden Erfindung besteht darin, eine variable Installationsanordnung zu schaffen, die alternative und zusätzliche Funktionalitäten ermöglicht und dabei montagefreundlich und optisch ansprechend ausgebildet ist.

Gelöst wird diese Aufgabe durch die im Patentanspruch 1 angegebenen Merkmale. Vorteilhafte Ausgestaltungen ergeben sich aus der Beschreibung, den Zeichnungen und den Unteransprüchen.

Die Erfindung gemäß dem Patentanspruch 1 weist den Vorteil auf, dass durch eine Integration von Funktionselementen außerhalb des elektrischen Versorgungsnetzes in eine elektrische Installationsanordnung zusätzliche Funktionen in einer zentralen Bedienstelle zusammengefasst werden können. Vorteilhafterweise lassen sich somit bisher separat angeordnete Komponenten mit nichtelektrischen, beispielsweise mechanischen, Funktionalitäten integrieren. Eine solche Anordnung spart Platz und ermöglicht ein einheitliches Erscheinungsbild trotz unterschiedlichster Anwendungen. Somit kann die bisherige Funktionalität von Installationsanordnungen deutlich verbessert werden.

Durch die Integration solcher zweiter Funktionselemente kann eine bedarfsgerechte Anpassung und Umrüstung einer Installationsanordnung an zusätzliche Anforderungen am Montageort realisiert werden kann. Eine bestehende Installationsanordnung kann einfach zu einer multifunktionalen Bedienstelle aufgerüstet werden.

Die Geometrie und die Struktur der zweiten Funktionselemente, der elektrischen Funktionselemente und der Rahmen sind aufeinander abgestimmt, so dass eine vollständige Kompatibilität geschaffen werden kann. Vorteilhaft ist dabei, dass im Falle einer Nachrüstung lediglich ein vorhandener Rahmen durch einen um eine Aufnahmeöffnung erweiterten Rahmen ausgetauscht und um das zweite Funktionselement ergänzt werden muss oder gegen ein zweites Funktionselement getauscht werden kann. Durch einheitliche Abmessungen und Strukturen können die Fertigungs-und Lagerkosten reduziert werden.

Da das Funktionselement des elektrischen Versorgungsnetzes in einer Montageöffnung der Wand fixiert wird und der Rahmen zwischen Bestandteilen dieses Funktionselementes eingeklemmt oder aufgerastet wird, erfordert die Installation eines zweiten Funktionselementes keine aufwendigen Montagetätigkeiten.

Je nach Ausführung und Funktion ist schon eine mechanische Verbindung in der entsprechenden Aufnahmeöffnung mit dem umgebenden Rahmen ausreichend, um das zweite Funktionselement zu befestigen. Dies kann kraft- und/oder formschlüssig erfolgen, wobei vorzugsweise komplementäre Rastmittel eingesetzt werden können. Das Funktionselement ist kann lösbar in der Installationsanordnung befestigt werden.

In einer weiteren Ausführung kann eine Befestigung des zweiten Funktionselementes an der Wand erfolgen, beispielsweise bei erhöhter Krafteinwirkung auf das zweite Funktionselement durch externe Geräte. Dafür können sich beispielsweise schraubende oder klebende Befestigungen eignen. Vorteilhafterweise unterstützen komplementäre Rastmittel die Befestigung, so dass eine lagegenaue Positionierung in der Aufnahmeöffnung des Rahmens erfolgt. Eine große Montageöffnung in der Wand wie bei den Funktionselementen des elektrischen Versorgungsnetzes ist nicht erforderlich.

Frontseitig kann das zweite Funktionselement bündig mit dem Rahmen abschließen, wobei es vorteilhafterweise optisch an das Design des Rahmens oder weiterer vorhandener Funktionselemente angepasst sein kann. Das Funktionselement kann ein adäquates Erscheinungsbild aufweisen.

Die Anordnung der Funktionselemente orientiert sich an den örtlichen Gegebenheiten, jedoch insbesondere unter dem Aspekt einer Nichtbeeinflussung von Funktionen.

Das zweite Funktionselement kann einteilig oder mehrteilig ausgebildet sein und als zentraler Einsatz in der Aufnahmeöffnung eines Mehrfach-Rahmens angeordnet sein. Das zweite Funktionselement kann eine in sich geschlossene Baugruppe bilden.

In einer weiteren Ausgestaltung kann das zweite Funktionselement auswechselbare Elemente aufweisen, um dasselbe Funktionselement durch Umrüstung einzelner Elemente für andere Funktionen nutzen zu können. In einer vorteilhaften Ausgestaltung können zweite Funktionselemente durch austauschbare oder ergänzende Einsätze oder Vorsätze an unterschiedliche Anforderungen angepasst werden. Optional können komplementäre Rastmittel eine zusätzliche Fixierung von externen Geräten schaffen.

Das zweite Funktionselement kann im Bad, in der Küche, im Büro, in der Werkstatt sowie in zahlreichen anderen Räumen angeordnet werden. Es können dabei beispielsweise Aufnahmekammern oder Halterungen für Badaccessoires, Küchenutensilien, Büromaterialien oder Werkzeuge ausgebildet werden.

In einer weiteren Verwendung kann das zweite Funktionselement eine magnetische oder haftende Oberfläche aufweisen, so dass Gegenstände oder Zettel befestigt werden können.

Vorteilhafte Anwendungsbereiche für zweite Funktionselemente können sich auch im Bereich der Darstellung von Informationen, beispielsweise visuelle und/oder akustische Informationen, ergeben. Unterschiedlich ausgestaltete zweite Funktionselemente können spezifische Anforderungen an die Darstellung der Informationen erfüllen. Beispielweise kann das zweite Funktionselement eine Uhr oder ein Thermometer aufweisen.

In einer vorteilhaften Ausgestaltung können die zweiten Funktionselemente als mechanischer Adapter für externe Geräte dienen. Hierbei können komplementäre Einrichtungen am zweiten Funktionselement und am externen Gerät zusammenarbeiten, so dass eine stabile mechanische Kopplung gewährleistet werden kann.

Weitere Einzelheiten, Merkmale und Vorteile der Erfindung ergeben sich aus nachfolgender Beschreibung eines bevorzugten Ausführungsbeispieles anhand der Zeichnungen.

Es zeigen:
- Fig. 1: eine Darstellung einer ersten schematisch dargestellten Installationsanordnung,
- Fig. 2: einen Schnitt durch die Installationsanordnung nach Figur 1,
- Fig. 3: eine Darstellung einer weiteren Installationsanordnung, und
- Fig. 4: einen Schnitt durch die Installationsanordnung nach Figur 3.

Gleiche oder gleichwirkende Bauteile sind in der nachfolgenden Beschreibung mit gleichen Bezugszeichen versehen.

Nachfolgend wird der Aufbau und die Funktionsweise der erfindungsgemäßen Installationsanordnung 1 schematisch anhand von alternativen Ausführungsbeispielen näher beschrieben.

Die Installationsanordnung 1 ist an einer Gebäudewand 2 befestigt und umfasst einen vertikal ausgerichteten Rahmen 3, sowie ein erstes Funktionselement 4 und ein zweites Funktionselement 5. Der Rahmen 3 ist rechteckig geformt und weist zwei gleich geformte Aufnahmeöffnungen 6 und 7 auf, die übereinander angeordnet sind. In der oberen Aufnahmeöffnung 6 ist das erste Funktionselement 4 angeordnet, während in der unteren Aufnahmeöffnung 7 das zweite Funktionselement 5 angeordnet ist.

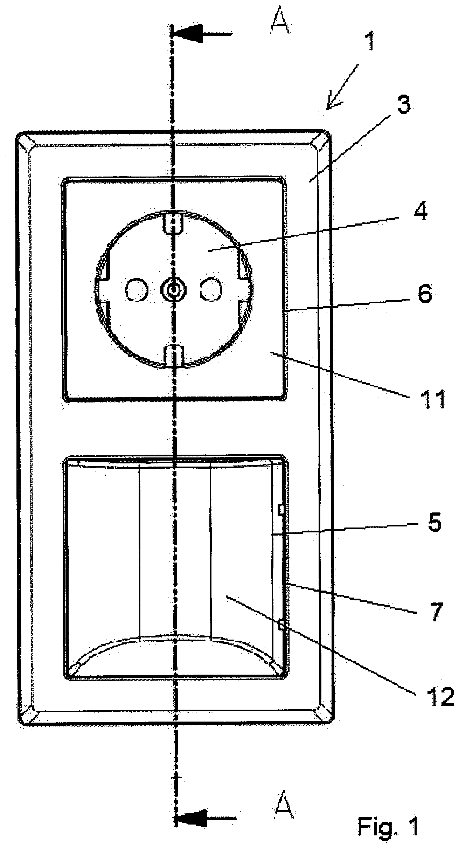

Das erste Funktionselement 4 ist ein elektrisches Installationsgerät, das Bestandteil eines elektrischen Versorgungsnetzes eines Gebäudes oder eines Raumes ist. In der Figur 1 ist das erste Funktionselement 4 in Form einer Steckdose dargestellt. Es ist jedoch auch jedes andere elektrische Installationsgerät denkbar. Das erste Funktionselement 4 ist ortsfest in einer Montageöffnung 8 der Gebäudewand 2 fixiert und kann dabei in einem nicht näher dargestellten Installationsgehäuse befestigt werden. Der Anschluss an das elektrische Versorgungsnetz erfolgt über in der Gebäudewand 2 verlegte Leitungen (nicht dargestellt).

Das erste Funktionselement weist einen Gerätesockel 9 auf, den außenseitig ein Tragrahmen 10 umgibt, der die Befestigung des ersten Funktionselementes 4 in dem Installationsgehäuse ermöglicht. Frontseitig ist ein Frontelement 11 angeordnet. Das Frontelement 11 ist unter Zwischenlage des Rahmens 3 an dem Gerätesockel 9 befestigt. Der Rahmen 3 ist damit hinreichend gegenüber der Gebäudewand 2 fixiert und positioniert. Im montierten Zustand ist das erste Funktionselement 4 flächenbündig in den Rahmen 3 integriert.

Das zweite Funktionselement 5 ist kein Bestandteil des elektrischen Versorgungsnetzes und hat mechanische Funktionen. In der Figur 1 ist das zweite Funktionselement 5 frontseitig mit einer Aufnahmekammer 12 ausgebildet. Es sind jedoch auch viele weitere Funktionalitäten für das zweite Funktionselement 5 denkbar. Die Montage des zweiten Funktionselementes 5 erfordert keine aufwendigen Montagetätigkeiten. Das zweite Funktionselement 5 ist in der Aufnahmeöffnung 7 an dem umgebenden Rahmen 2 befestigt, wobei nicht dargestellte komplementäre Rastmittel eine kraft- und/oder formschlüssig Fixierung gewährleisten. Das zweite Funktionselement 5 kann zusätzlich schraubend an der Gebäudewand 2 befestigt werden, sofern die Funktion des zweiten Funktionselementes 5 eine derartige Befestigung erfordert, beispielsweise bei erhöhter Krafteinwirkung auf das zweite Funktionselement 5 durch externe Geräte. Rückseitig liegt das zweite Funktionselement 5 an der Gebäudewand 2 an. Im montierten Zustand ist das zweite Funktionselement 5 frontseitig flächenbündig in den Rahmen 3 integriert.

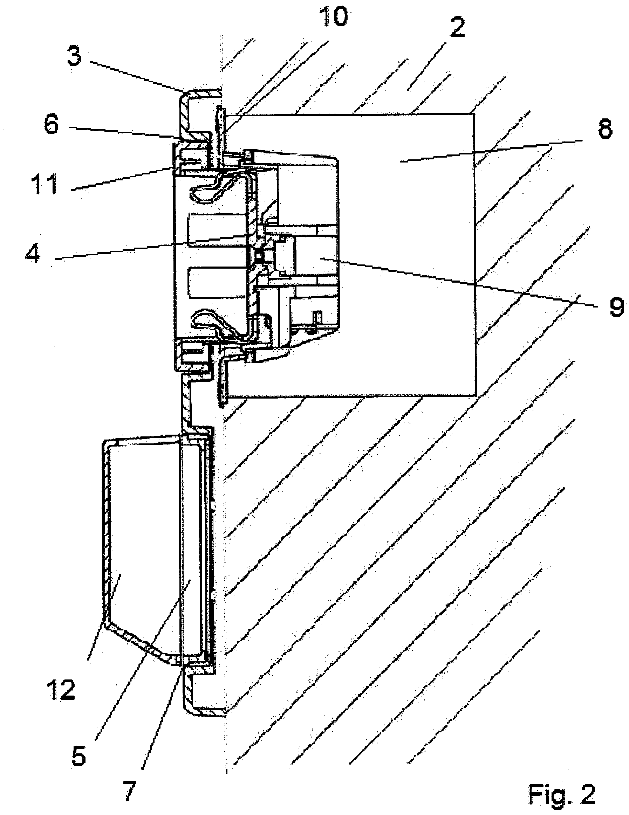

In der Ausgestaltung gemäß der Figuren 1 und 2 kann die Installationsanordnung 1 beispielsweise in der Küche oder im Bad angeordnet sein. Die Aufnahmekammer 12 des zweiten Funktionselementes 5 dient dann beispielsweise zur Aufnahme von Badaccesoires wie Scheren, Kosmetikstifte oder von Küchenutensilien wie Bestecke oder Stifte.

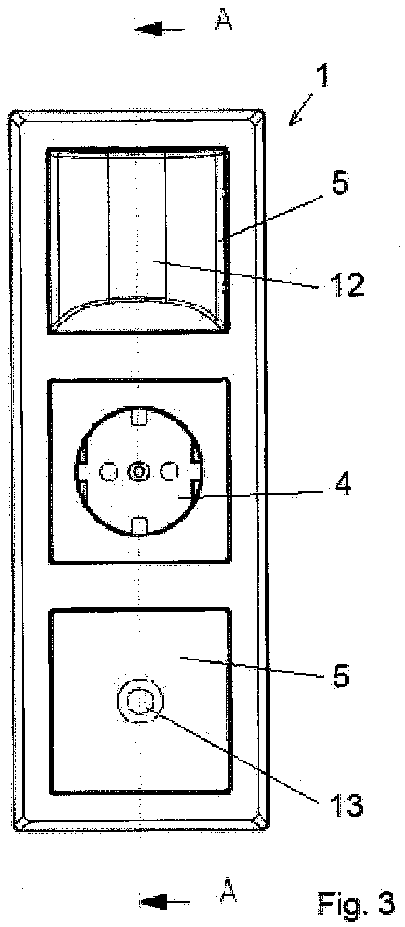

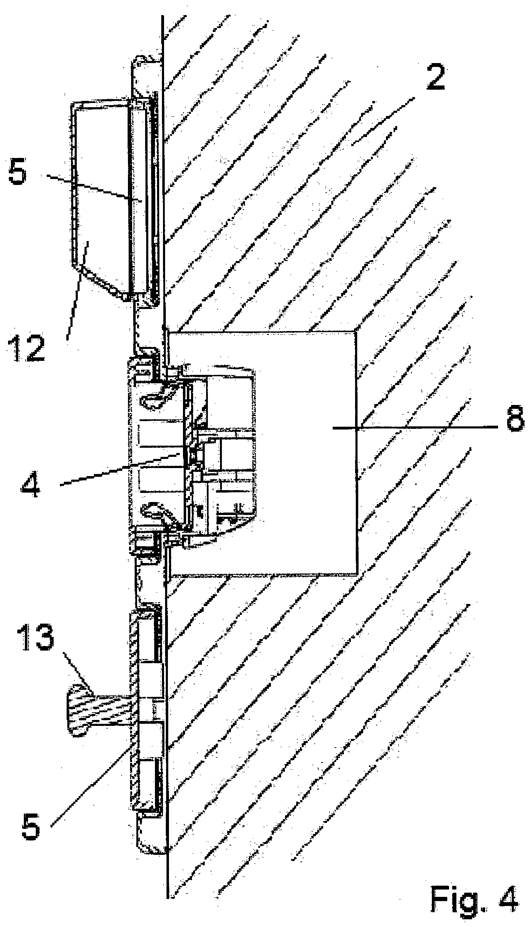

In der Fig. 3 und in der Fig. 4 ist eine alternative Ausführungsform der Installationsanordnung 1 dargestellt. In Figur 3 ist ein Rahmen mit drei horizontal angeordneten Funktionselementen dargestellt. Ein erstes Funktionselement 4 ist Bestandteil des elektrischen Versorgungsnetzes und mittig angeordnet, während je ein zweites Funktionselemente 5 oberhalb und unterhalb des ersten Funktionselementes 4 angeordnet ist. Das obere zweite Funktionselement 5 weist frontseitig eine Aufnahmekammer 12 auf. Das untere zweite Funktionselement 5 weist frontseitig eine Halterung 13 in Form eines Hakens auf, beispielsweise für Handtücher, Schlüssel oder sonstige Gegenstände.

### Bezugszeichenliste

- 1: Installationsanordnung
- 2: Gebäudewand
- 3: Rahmen
- 4: erstes Funktionselement
- 5: zweites Funktionselement
- 6: Aufnahmeöffnung
- 7: Aufnahmeöffnung
- 8: Montageöffnung
- 9: Gerätesockel
- 10: Tragrahmen
- 11: Frontelement
- 12: Aufnahmekammer
- 13: Halterung

## Patentansprüche

1. Installationsanordnung umfassend einen Rahmen (3) mit mindestens zwei Aufnahmeöffnungen (6, 7), wobei in einer ersten Aufnahmeöffnung (6) ein erstes Funktionselement (4) angeordnet ist, das Bestandteil eines elektrischen und/oder optischen Versorgungsnetzes ist und das in einer Wand (2) befestigt ist, und wobei in einer zweiten Aufnahmeöffnung (7) ein zweites Funktionselement (5) angeordnet ist, das nicht Bestandteil eines elektrischen und/oder optischen Versorgungsnetzes ist, wobei die Aufnahmeöffnungen (6, 7) die gleichen Abmessungen aufweisen und das zweite Funktionselement (5) Mittel (12, 13) aufweist, um externe Gegenstände aufzunehmen oder um externe Geräte mechanisch zu koppeln,
**dadurch gekennzeichnet, dass** das zweite Funktionselement (5) an der Wand (2) aufliegend in dem Rahmen (3) anordenbar ist und frontseitig eine Halterung in Form eines Hakens (13) aufweist.

2. Installationsanordnung nach zumindest einem der vorhergehenden Patentansprüche, **dadurch gekennzeichnet, dass** das zweite Funktionselement (5) eine in sich geschlossene Baugruppe bildet.

3. Installationsanordnung nach zumindest einem der vorhergehenden Patentansprüche, **dadurch gekennzeichnet, dass** das zweite Funktionselement (5) an dem Rahmen (3) und/oder an der Wand (2) befestigbar ist.

4. Installationsanordnung nach zumindest einem der vorhergehenden Patentansprüche, **dadurch gekennzeichnet, dass** das zweite Funktionselement (5) lösbar an dem Rahmen (3) anordenbar ist.

5. Installationsanordnung nach zumindest einem der vorhergehenden Patentansprüche, **dadurch gekennzeichnet, dass** das zweite Funktionselement (5) frontseitig flächenbündig zu dem umgebenden Rahmen (3) anordenbar ist.

## Claims

1. An installation arrangement comprising a frame (3) having at least two reception openings (6, 7), wherein a first functional element (4) which is an element of an electrical and/or optical supply network and which is fastened in a wall (2) is arranged in a first reception opening (6); and wherein a second functional element (5) which is not an element of an electrical and/or optical supply network is arranged in a second reception opening (7), wherein the reception openings (6, 7) have the same dimensions and the second functional element (5) has means (12, 13) to receive external articles or to couple external units mechanically,
**characterized in that** the second functional element (5) can be arranged in the frame (3) such that it lies on the wall (2) and has a holder in the form of a hook (13) at the front side.

2. An installation arrangement in accordance with at least one of the preceding claims, **characterized in that** the second functional element (5) forms a self-contained assembly.

3. An installation arrangement in accordance with at least one of the preceding claims, **characterized in that** the second functional element (5) can be fastened to the frame (3) and/or to the wall (2).

4. An installation arrangement in accordance with at least one of the preceding claims, **characterized in that** the second functional element (5) can be releasably arranged at the frame (3).

5. An installation arrangement in accordance with at least one of the preceding claims, **characterized in that** the second functional element (5) can be arranged at the front side with areal alignment with respect to the surrounding frame (3).

## Revendications

1. Ensemble d'installation comportant un cadre (3) pourvu d'au moins deux ouvertures de logement (6, 7), dans lequel un premier élément fonctionnel (4) faisant partie d'un réseau d'alimentation électrique et/ou optique et fixé sur un mur (2) est agencé dans une première ouverture de logement (6), et un second élément fonctionnel (5) qui ne fait pas partie d'un réseau d'alimentation électrique et/ou optique est agencé dans une seconde ouverture de logement (7), les ouvertures de logement (6, 7) présentant les mêmes dimensions et le second élément fonctionnel (5) comprenant des moyens (12, 13) pour recevoir des objets externes ou pour coupler mécaniquement des appareils externes,
**caractérisé en ce que**
le second élément fonctionnel (5) est susceptible d'être agencé dans le cadre (3) en s'appuyant contre le mur (2) et comprend du côté frontal un élément de maintien sous la forme d'un crochet (13).

2. Ensemble d'installation selon la revendication précédente,
**caractérisé en ce que**
le second élément fonctionnel (5) constitue un ensemble structurel fermé en soi.

3. Ensemble d'installation selon l'une au moins des revendications précédentes,
**caractérisé en ce que**
le second élément fonctionnel (5) est susceptible d'être fixé au cadre (3) et/ou au mur (2).

4. Ensemble d'installation selon l'une au moins des revendications précédentes,
**caractérisé en ce que**
le second élément fonctionnel (5) est susceptible d'être agencé de façon détachable sur le cadre (3).

5. Ensemble d'installation selon l'une au moins des revendications précédentes,
**caractérisé en ce que**
du côté frontal, le second élément fonctionnel (5) est susceptible d'être agencé en affleurement avec le cadre entourant (3).
